# EUROPÄISCHE PATENTSCHRIFT

(11) **EP 0 605 798 B1**
(45) Veröffentlichungstag und Bekanntmachung des Hinweises auf die Patenterteilung: **05.03.1997**
(21) Anmeldenummer: 93119616.6
(22) Anmeldetag: 06.12.1993
(51) Int. Cl.: B65D 90/08, B29C 44/00

(54) **Verbindung zwischen dem unteren Ende einer Seitenwandplatte und der Bodenplatte eines Grosscontainers**
Connection between a side wall lower end and the bottom panel of a large container
Jonction entre l'extrémité inférieure d'une paroi et le plancher d'un grand récipient

(30) Priorität: 08.12.1992 DE 4241268
(43) Veröffentlichungstag der Anmeldung: 13.07.1994
(73) Patentinhaber: GRAAFF Gesellschaft mit beschränkter Haftung, D-31008 Elze (DE)
(72) Erfinder: Graaff, Wolfgang, Dipl.-Ing., D-31134 Hildesheim (DE)
(74) Vertreter: Walter, Helmut, Dipl.-Ing.

(56) Entgegenhaltungen:
- EP-A- 0 064 712
- EP-A- 0 326 631
- EP-A- 0 348 629
- EP-A- 0 367 275
- EP-A- 0 372 189
- DE-A- 4 003 929
- GB-A- 2 019 363

## Beschreibung

Die Erfindung bezieht sich auf die Verbindung zwischen dem unteren Ende einer Seitenwandplatte und der Bodenplatte eines Großcontainers gemäß dem Gattungsbegriff des Anspruchs 1.

Bei der Herstellung von Großcontainern aus vorgefertigten Sandwichplatten ist es bekannt, die Sandwichplatten für die Seitenwände und die Sandwichplatte für den Containerboden bei ihrer Herstellung nicht bis zu den einander zugehörigen Rändern auszuschäumen, sondern den zwischen den Deckplatten sich bildenden Starrschaumblock gegenüber den Plattenrändern nach innen versetzt enden zu lassen. Eine derart vorgefertigte Bodenplatte und eine ebenfalls vorgefertigte Seitenwandplatte werden in eine Form eingelegt bzw. eingestellt und es entsteht im Bereich zwischen den Stirnseiten der Stützschaumschichten von Boden- und Seitenwandplatte ein freier Raum, der zeitweise durch Wandteile der Form abgedeckt wird. In die so gebildete allseits geschlossene Kammer werden die Stützschaumkomponenten eingegeben und zum Aufschäumen gebracht. Im Erstarren geht der Stützschaum eine feste Verbindung mit den Stirnseiten der Stützschaumschichten von Seitenwand und Boden ein, durch deren besondere Vorbehandlung jedoch nicht mit den Wandteilen der Form. Ist der Stützschaum erstarrt und eine feste Verbindung mit den Stützschaumschichten von Seitenwand und Boden sowie Teilen von Deckplatten von Seitenwand und Boden eingegangen, so werden die Formwände entfernt und der im Übergangsbereich freiliegende starre Schaumkörper wird beplankt, so daß eine über den Rand zwischen Bodenplatte und Seitenwand hinweggeführte Doppelwand vorliegt, die aus zwei Deckplatten und einer durchgehenden Stützschaumschicht besteht.

Bekannt ist es auch, die Beplankung des Stützschaumes im Übergangsbereich in die Form vor der Stützschaumbildung einzulegen, so daß der Stützschaum im Erhärten auch eine Verbindung mit ihr eingeht und die fertige Verbindung vorliegt, wenn der Container aus der Form herausgenommen wird bzw. die Form vom Container entfernt wird.

Im besonderen ist eine Eckenverbindung bekannt, bei der das Ausschäumen des zunächst freigelassenen Eckenbereiches zwischen der Bodenplatte und einer Wandplatte des Containers, die beide als Sandwichplatten hergestellt und dann zusammengesetzt worden sind, an Ort und Stelle (in situ) erfolgt, wobei die Übergangswände zwischen Boden- und Wandplatte zunächst noch fehlen und durch Platten eines Werkzeuges ersetzt sind, der so gebildete Hohlraum ausgeschäumt wird, nach dem Erstarren des Schaumes ein äußeres Deckprofil am Schaumkörper angeklebt wird und dabei von außen an der äußeren Deckplatte der Seitenwand und einer Fläche der Bodenplatte in Anlage kommt, während ein inneres Deckprofil in ein Gelenk der oberen Bodendeckplatte eingehängt und an die Außenseite der inneren Seitenwanddeckplatte herangeklappt wird (DE 40 03 929). In der hochgeklappten Stellung wird das innere Deckprofil dann mit dem Stützschaum des Übergangsbereiches und gegebenenfalls der inneren Seitenwanddeckplatte verklebt oder in einer anderen geeigneten Weise verbunden. In der hochgeklappten Stellung bildet das innere Deckprofil an seinem oberen Ende zusammen mit der inneren Seitenwanddeckplatte eine Nut oder Rinne, in die eine Dichtschnur eingedrückt wird, um das Eindringen von Flüssigkeit in die Seitenwand und gegebenenfalls sogar den Boden zu verhindern, weil sonst die Schaumstoffstützschicht verrollen würde. Diese notwendige Ausbildung einer Dichtung ist nicht nur aufwendig, sondern stellt auch eine Gefahrenquelle dar, weil bei Arbeiten Arbeitsgeräte in der Rinne hängenbleiben können, die von dem inneren Deckprofil gebildete Rinnenwand abgespreizt werden und abbrechen kann.

Aufgabe der Erfindung ist es, besonders zweckmäßige Lösungen für die Verbindung zwischen einer Seitenwand- und der Bodenplatte eines Großcontainers aufzuzeigen. Die Erfindung besteht in der Verbindung selbst und in einem Verfahren für die Herstellung der Verbindung gemäß den Ansprüchen.

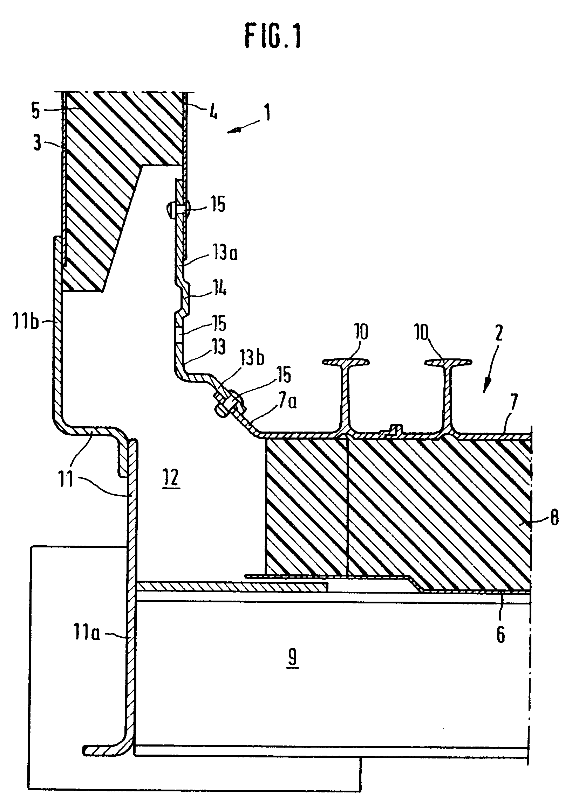

Diese Erfindung ist nachfolgend anhand der Zeichnung näher erläutert, wobei jede Figur der Figuren 1 bis 4 der Zeichnung eine Ausführungsform der Erfindung darstellt.

Eine Seitenwand 1 und der Boden 2 eines Großcontainers ist je eine Sandwichplatte, bei der der Raum zwischen zwei Deckplatten aus Metall o. dgl. mit einem Kern aus Starrschaum ausgefüllt ist. Ein Starrschaumblock kann beiderseits mit einer Deckplatte beplankt worden sein oder in einer Form sind die Deckplatten eingestellt gewesen und in den von den Deckplatten und Formteilen allseits geschlossenen Raum bestimmten Volumens waren fließfähige Schaumkomponenten eingegeben und zum Aufschäumen gebracht worden, so daß ein stützender Schaumstoff aus Starrschaum entstanden und mit den Deckplatten eine feste Verbindung eingegangen war.

Jede Figur der Zeichnung stellt einen Querschnitt durch einen Container in dem Bereich dar, in dem eine Seitenwand 1 und der Boden 2 des Containers zusammenstoßen. Die Seitenwand 1 bzw. Seitenwandplatte weist eine äußere Seitenwanddeckplatte 3, eine innere Seitenwanddeckplatte 4 und die zwischen den Deckplatten 3,4 liegende, mit diesen verbundene Stützschicht 5 aus Starrschaum auf. Der Boden 2 bzw. die Bodenplatte weist eine untere Bodendeckplatte 6, eine obere Bodendeckplatte 7 und die zwischen den Deckplatten 6,7 liegende, mit diesen verbundene Stützschicht 8 aus Starrschaum auf. Die Bodenplatte ist durch äußere Querträger 9 versteift, die obere Bodendeckplatte 7 weist Längsrippen 10 auf. Sowohl die Bodenplatte 2 als auch die Seitenwandplatte 1 ist so ausgeschäumt bzw. mit einer Stütz- bzw. Starrschaumschicht 5 bzw. 8 versehen, daß die Stütz- bzw. Starrschaumschicht 5 bzw. 8 nicht ganz bis an den jeweiligen Plattenrand heranreicht bzw. die Deckplatten über die Stützschicht um ein vorgegebenes Maß hinausragen.

Die so vorbereitete Seitenwandplatte 1 und Bodenplatte 2 werden beim Bau eines Containers in der gewollten Zuordnung zueinander in einer Form positioniert. An die Bodenplatte wird eine in der Längsrichtung des Containers verlaufende Wand 11 angebaut, die im wesentlichen ein vertikales, am unteren Ende nach außen abgewinkeltes Blech 11a o. dgl. ist, an den Stirnseiten der Querträger 9 befestigt ist und sich von den unteren Enden der Querträger frei über diese nach oben hinweg bis nahe an die Oberseite der Bodenplatte erstreckt. Zwischen das obere Ende des Bleches 11a o. dgl. und das untere Ende der äußeren Seitenwandplatte 3 wird ein Z-förmig gebogenes Blech 11b o. dgl. eingesetzt.

Die Z-Form ist gewählt, weil die äußeren Enden der Bodenquerträger 9 hinter der vertikalen Ebene enden, in der die äußere Seitenwanddeckplatte 3 verläuft. Die Wand 11 mit den Teilen 11a und 11b bildet ein äußeres Deckprofil für den zunächst noch freien Raum 12 zwischen den Stirnseiten von Bodenplatte 2 bzw. Bodenplattenstützschicht 8 und Seitenwandplatte 1 bzw. Seitenwandplattenstützschicht 5.

Entsprechend erfolgt die Abdeckung des zunächst noch freien Raumes 12 nach dem Inneren des Containers hin durch ein inneres Deckprofil 13. Dieses innere Deckprofil 13 weist einen oberen Schenkel 13a und einen unteren Schenkel 13b auf, von denen der obere Schenkel 13a durch eine Längsrippe 14 versteift ist. Der untere Schenkel 13b schließt mit dem oberen Schenkel einen stumpfen Winkel von etwa 135°, um auf einem entsprechend nach oben gebogenen glatten Rand 7a der oberen Bodendeckplatte 7 aufzuliegen. Der obere Schenkel 13a liegt mit seinem glatten Rand hinter der inneren Seitenwanddeckplatte 4. Um das zu ermöglichen, endet die Seitenwandstützschicht 5 oberhalb des unteren Randes der Seitenwanddeckplatte 4, während die Seitenwandstützschicht 5 im Bereich der äußeren Seitenwanddeckplatte 3 über den unteren Rand der Seitenwanddeckplatte 3 hinausragt, so daß sie dort nach der Zuordnung des äußeren Deckprofils 11 von dessen Teil 11b verdeckt ist. Deckprofil 11,13, Dicke von Seitenwandplatte 1 und Bodenplatte 2 sowie noch freier Raum 12 sind so bemessen, daß das innere Deckprofil 13 bei der Zuordnung zu Seitenwandplatte 1 und Bodenplatte 2 hinter die innere Seitenwanddeckplatte 4 und auf die Oberseite der oberen Bodendeckplatte 7 gebracht werden kann und dabei gegebenenfalls auch gekippt werden kann, wenn es nicht vorgezogen wird, das innere Deckprofil 13 von den Seitenwandplatten- und Bodenplattenenden her in den Freiraum 12 und über den Rand 7a der oberen Bodendeckplatte 7 zu schieben. Ist das innere Deckprofil 13 mit den beiden Platten 1, 2 fest zu verbinden, finden auf die Länge des Deckprofils 13 verteilte Niete 15 Anwendung, die bevorzugt bekannte Sprengniete sind. Die Verbindung des äußeren Deckprofils 11 mit der Seitenwandplatte 1 und der Bodenplatte 2 erfolgt in entsprechender oder einer anderen zweckmäßigen Weise. Sind Bodenplatte 2 und Seitenwandplatte 1 auf diese Weise durch äußeres Deckprofil 11 und innerem Deckprofil 13 miteinander verbunden, so kann der Freiraum 12, an den Enden durch geeignete Schalungsplatten verschlossen, ausgeschäumt werden. Hierzu weist eines der Deckprofile 11,13, vorzugsweise das innere Deckprofil 13, auf seine Länge verteilt, Einlaßöffnungen 15 auf, durch die fließfähige Schaumstoffkomponenten in den Freiraum 12 eingebracht werden können, worauf sie aufschäumen und im Erstarren zu stützfähigem Starrschaum eine feste Verbindung mit den Innenseiten der Deckprofile 11,13 und den Stirnseiten der Stützschichten 5,8 eingehen. Je nach dem zugelassenen Aufschäumdruck kann dies ohne äußere Abstützung der Deckprofile 11,13 oder mit deren äußerer Abstützung in einer entsprechenden Form geschehen.

Nach dem Erstarren des in den Freiraum 12 eingebrachten Stützschaumes liegt eine gut winkelsteife Verbindung zwischen der Seitenwandplatte 1 und der Bodenplatte 2 vor, die sich gut in die Containerkontur einfügt, wenig über die von der Seitenwandplatte 1 und der Bodenplatte 2 Containerkontur vorsteht und nur wenige Stellen hat, die Anlaß zum Schmutzansatz sein könnten und die stehende Nässe nicht aufkommen läßt. Hierauf ist Rücksicht zu nehmen, wenn nach dem Ausschäumen des Raumes 12 die Öffnungen 15 verschlossen werden. Am einfachsten geschieht das durch den sich bildenden Starrschaum selbst in an sich bekannter Weise.

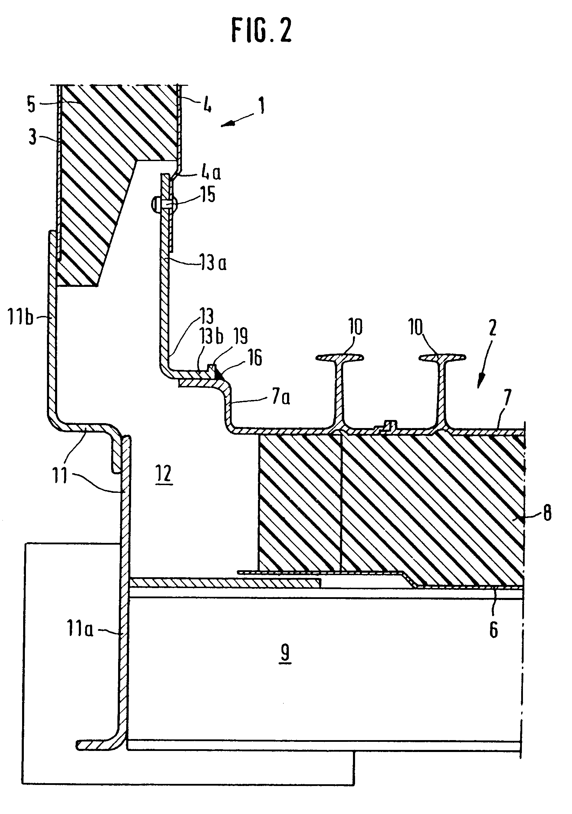

Die Lösung nach Fig. 2 weicht von der Lösung nach Fig. 1 durch die Ausbildung des inneren Deckprofils 13 ab, sowie eine etwas andere Ausbildung der Randbereiche der inneren Seitenwanddeckplatte 4 und der oberen Bodendeckplatte 7. Die beiden Schenkel 13a und 13b des inneren Deckprofils 13 schließen einen rechten Winkel ein. Der obere Schenkel 13a liegt wieder hinter der inneren Seitenwanddeckplatte 4, deren Rand 4a jedoch so nach dem Platteninnenbereich eingezogen ist, daß die Befestigungsmittel 15 zwischen innerem Deckprofil 13 und Seitenwandplatte 1 nicht über die Ebene vorstehen, in der die innere Seitenwanddeckplatte 4, vom Randbereich 4a abgesehen, liegt.

Der Randbereich 7a der oberen Bodendeckplatte 7 bildet eine Stufe nach oben, auf deren oberem, horizontalem Flansch der untere, horizontale Schenkel 13b des inneren Deckprofils 13 aufliegt und zwar in einer Ebene, die etwas unterhalb der Horizontalebene liegt, die durch die Oberseiten der Köpfe der Längsrippen 10 der Bodenplatte 2 bestimmt ist.

Die Verbindung zwischen innerem Deckprofil 13 und Seitenwandplatte 1 erfolgt wie bei der Ausführung gemäß Fig. 1 durch die bereits erwähnten Niete 15. Die Verbindung zwischen dem inneren Deckprofil 13 und der Bodenplatte 2 erfolgt durch eine Schweißnaht 16 vor der Stirnseite des unteren, horizontalen Schenkels 13b des inneren Deckprofils und dem oberen, horizontalen Flansch des Randbereiches 7a der oberen Bodendeckplatte 7 nahe dem inneren Ende dieses Flansches und dem vertikalen Steg zwischen dem oberen, horizontalen Flansch und der eigentlichen oberen Bodendeckplatte 7.

Ansonsten entspricht die Ausführungsform der Fig. 2 der Ausführungsform der Fig. 1 in Bauweise, Wirkung und Vorteilen.

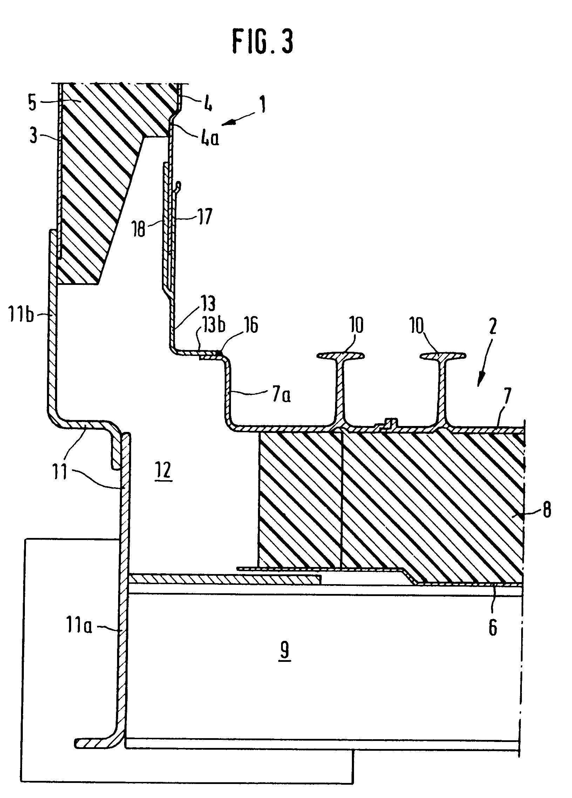

Die Ausführungsform der Fig. 3 ist eine Abwandlung der Ausführungsform der Fig. 2 in der Weise, daß der vertikale Schenkel 13a des inneren Randprofiles 13 als Gabel ausgebildet ist, in die der untere Randbereich der inneren Seitenwanddeckplatte 4 eingeführt ist. Die Einbringung erfolgt auf einer wesentlichen Länge bzw. Höhe und im wesentlichen spiellos, so daß Seitenwandplatte 1 und inneres Deckprofil 13 ohne besondere Befestigungsmittel miteinander verbunden sind. Die äußere Lasche 17 der Gabel liegt in der Ebene, in der sich die innere Seitenwanddeckplatte 4 befindet, ehe sie mit ihrem von der Gabel zumindest im wesentlichen Teil aufgenommenen Randbereich 4a entsprechend weit in das Platteninnere zurückspringt. Diese Lasche 17 ist am oberen Rand etwas nach außen gebogen, um mit der inneren Seitenwanddeckplatte eine Rinne zu bilden, in die eine Dichtschnur einzulegen ist. Wenn auch insoweit eine Übereinstimmung mit der einen als Stand der Technik beschriebenen Eckenverbindung besteht, so ist doch dem Stand der Technik gegenüber ein erheblicher Vorteil gegeben, weil Feuchtigkeit sich zunächst der von der Gabel und der eingesteckten inneren Seitenwanddeckplatte gebildeten Labyrinthdichtung gegenüber sähe, die für sich schon einen gewissen Schutz gegen das Eindringen von Feuchtigkeit in das Wandinnere erschweren bzw. weitgehend verhindern würde. Während beim Stand der Technik die Rinne mit Dichtschnur unverzichtbar ist, ist diese Lösung hier eine Option für größtmögliche Sicherheit bei Inkaufnahme einer gewissen Unfallgefahr, auf die verzichtet werden kann bzw. die zum Gegenstand einer von Fall-zu-Fall-Entscheidung gemacht werden kann.

Der untere, horizontale Schenkel 13b des inneren Deckprofils 13 endet glatt und in der Schweißnaht 16, im Gegensatz zu der Ausführungsform nach Fig. 2, wo der untere, horizontale Schenkel 13b des inneren Deckprofils 13 in einer nach oben gerichteten Randleiste 19 endet.

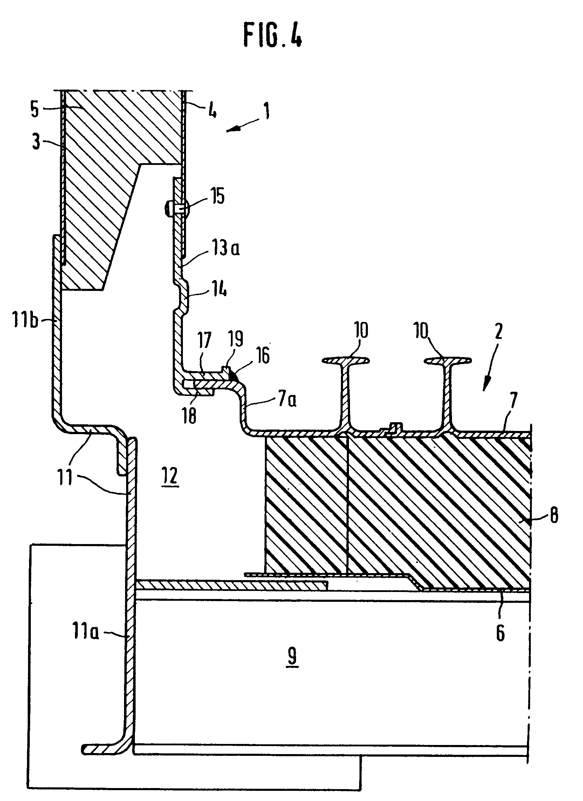

Bei der Ausführungsform nach Fig. 4 schließlich ist der obere, vertikale Schenkel 13a des inneren Deckprofils 13 so ausgebildet und mit der inneren Seitenwanddeckplatte 4 verbunden, wie dies bei der Ausführungsform nach Fig. 1 der Fall ist. Der untere, horizontale Schenkel 13b des inneren Deckprofils 13 ist dagegen als Gabel mit den Laschen 17,18 ausgebildet, um den gemäß FIg. 2,3 nach oben stufenförmig abgekröpften Randbereich 7a der oberen Bodendeckplatte 7 extrem spielarm aufzunehmen. Da jedoch die Gabel mit den Laschen 17,18 den Randbereich 7a bzw. dessen oberen, horizontalen Abschnitt nur auf einer relativ geringen Länge erfaßt, ist die obere Lasche 17 mit einer Schweißnaht 16 an die obere Bodendeckplatte angeschweißt.

## Patentansprüche

1. Verbindung zwischen dem unteren Ende einer Seitenwandplatte und dem zugehörigen Längsrand der Bodenplatte eines Großcontainers, wobei sowohl die Seitenwand als auch die Bodenplatte eine vorgefertigte Sandwichplatte ist und nach dem Zusammenfügen beider Platten im Übergangsbereich zunächst ein Freiraum verbleibt, der ausgeschäumt wird, wobei der ausgeschäumte Übergangsbereich von einem inneren Deckprofil zwischen der oberen Deckplatte der Bodenplatte und der inneren Deckplatte der Seitenwandplatte sowie ein äußeres Deckprofil zwischen äußerer Deckplatte der Seitenwandplatte und unterer Deckplatte der Bodenplatte abgedeckt ist, **dadurch gekennzeichnet**, daß das äußere Deckprofil (11) von außen an der äußeren Seitenwanddeckplatte (3) und der dieser Seitenwand zugeordneten Stirnseite der Bodenplatte (2) anliegt, während das innere Deckprofil (13) an der Innenseite der inneren Seitenwanddeckplatte (4) und auf der Oberseite der oberen Bodendeckplatte (7) aufliegt.

2. Verbindung nach Anspruch 1, **dadurch gekennzeichnet**, daß das innere Deckprofil (13) mit je einem glatten Randstreifen sowohl auf der Innenseite der inneren Seitenwanddeckplatte (4) als auch auf der Oberseite der oberen Bodendeckplatte (7) aufliegt.

3. Verbindung nach Anspruch 2, **dadurch gekennzeichnet**, daß die einander überdeckenden und aufeinanderliegenden Randbereiche von oberer Bodendeckplatte (7) und innerem Deckprofil (13) schräg sowohl zur Bodenplatte (2) als auch schräg zur Seitenwandplatte (1) verlaufen.

4. Verbindung nach Anspruch 3, **dadurch gekennzeichnet**, daß die einander überdeckenden und aufeinanderliegenden Randbereiche von oberer Bodendeckplatte (7) und innerem Deckprofil (13) unter einem Winkel von etwa 45° zur Bodenplatte (2) schräg sowohl zur Bodenplatte (2) als auch schräg zur Seitenwandplatte (1) verlaufen.

5. Verbindung nach einem der Ansprüche 1 bis 4, **dadurch gekennzeichnet**, daß das innere Deckprofil (13) in sich versteifend konturiert ist und hierzu Längsrippen (14) bildet.

6. Verbindung nach Anspruch 1, **dadurch gekennzeichnet**, daß das innere Deckprofil (13) im Querschnitt einen rechten Winkel mit glatten Schenkeln bildet, wobei der der Bodenplatte (2) zugehörige Schenkel eine einseitig nach oben gerichtete Randleiste aufweist.

7. Verbindung nach einem der Ansprüche 1 bis 5, **dadurch gekennzeichnet**, daß die Verbindung zwischen innerem Deckprofil (13) einerseits und innerer Seitenwanddeckplatte (4) sowie oberer Bodendeckplatte (7) andererseits durch Niete erfolgt.

8. Verbindung nach Anspruch 7, **dadurch gekennzeichnet**, daß die Niete Sprengniete sind.

9. Verbindung nach Anspruch 6, **dadurch gekennzeichnet**, daß die Verbindung zwischen dem bodenplattenseitigen Schenkel des inneren Deckprofils (13) und der oberen Bodendeckplatte (7) durch eine Schweißnaht vor der Stirnseite des bodenplattenseitigen Schenkels des inneren Deckprofils erfolgt.

10. Verbindung nach den Ansprüchen 6 und 9, **dadurch gekennzeichnet**, daß der mit dem inneren Deckprofil (13) zu verbindende Rand der oberen Bodendeckplatte (7) gegenüber der eigentlichen Bodenplatte (2) nach oben versetzt ist und der bodenplattenseitige Schenkel des inneren Deckprofils (13) bis nahe an die innere Kante des nach oben versetzten Randes der oberen Bodendeckplatte (7) herangeführt ist.

11. Verbindung nach einem der Ansprüche 1 bis 4, **dadurch gekennzeichnet**, daß der eine Schenkel des inneren Deckprofils (13) im Querschnitt gabelförmig ausgebildet ist und in diese Gabel die innere Seitenwanddeckplatte bzw. die obere Bodendeckplatte eingeführt ist.

12. Verbindung nach Anspruch 11, **dadurch gekennzeichnet**, daß die innere Seitenwanddeckplatte (13) bzw. die obere Bodendeckplatte (7) spiellos und soweit in die Gabel eingeführt ist, daß keine zusätzlichen Befestigungsmittel im Gabelbereich notwendig sind.

13. Verbindung nach Anspruch 11 oder 12, **dadurch gekennzeichnet,** daß die innere Seitenwanddeckplatte (4) in die Gabel des inneren Deckprofils (13) eingeführt ist, daß die innere Seitenwanddeckplatte (4) vor der Gabel so weit in das Innere der Seitenwandplatte (1) gekröpft ist, daß die Außenseite der Seitenwanddeckplatte (4) und die Außenseite des außen an der Seitenwanddeckplatte anliegenden Schenkels des Deckprofils (13) in einer vertikalen Ebene liegen.

14. Verfahren zum Herstellen einer Verbindung nach mindestens einem der Ansprüche 1 bis 13 zwischen dem unteren Ende einer Seitenwandplatte und dem zugehörigen Längsrand der Bodenplatte eines Großcontainers, wobei sowohl die Seitenwand als auch die Bodenplatte eine vorgefertigte Sandwichplatte ist und nach dem Zusammenfügen beider Platten im Übergangsbereich zunächst ein Freiraum verbleibt, der ausgeschäumt wird, wobei der ausgeschäumte Übergangsbereich von einem inneren Deckprofil zwischen oberer Deckplatte der Bodenplatte und innerer Deckplatte der Seitenwandplatte sowie einem äußeren Deckprofil zwischen äußerer Deckplatte der Seitenwandplatte und unterer Deckplatte der Bodenplatte abgedeckt ist, unter Verwendung o.g. Verbindung, **dadurch gekennzeichnet**, daß zunächst Seitenwandplatte und Bodenplatte in ausgeschäumtem Zustand in einer Vorrichtung in die richtige Position zueinander gebracht werden, daß dann von außen das äußere Deckprofil an der äußeren Seitenwanddeckplatte und an der unteren Bodendeckplatte in Anlage gebracht und mit beiden Deckplatten verbunden wird, daß daraufhin das innere Deckprofil der inneren Seitenwanddeckplatte und der oberen Bodendeckplatte zugeordnet wird, wobei die Bemessungen von Seitenwandplatte, Bodenplatte und inneres Deckprofil so relativ zueinander bemessen sind, daß das innere Deckprofil zum Anlegen an der Innenseite der inneren Seitenwanddeckplatte in die Umgrenzung der Gesamtkonstruktion eingebracht werden kann, daß daran anschließend die notwendigen Verbindungen zwischen Deckprofil einerseits und Seitenwand- sowie Bodenplatte andererseits hergestellt werden, daß anschließend noch flüssiger Stützschaum bzw. seine Komponenten in den umschlossenen, aber zunächst noch vom Stützschaum freien Bereich eingebracht werden, wozu Öffnungen in dem inneren Deckprofil vorgesehen sind und daß daran anschließend der Stützschaum im Erstarren eine feste Verbindung mit den Stützschaumkörpern von Seitenwand- und Bodenplatte sowie die beiden Deckprofilen eingeht, worauf die Einlaßöffnungen, gegebenenfalls durch in diese Öffnungen belassenen Stützschaum bzw. Stützschaumkomponenten verschlossen werden.

## Claims

1. A connection between the bottom end of a side wall panel and the associated longitudinal edge of the bottom panel of a large container, wherein both the side wall and the bottom panel are a prefabricated sandwich panel and, after the two panels have been joined together, there is initially in the transition zone a free space which is filled with foam, the foam-filled transition zone being covered by an inside covering profile between the top outer panel of the bottom panel and the inside outer panel of the side wall panel, and an outside covering profile between the outside outer panel of the side wall panel and the bottom outer panel of the bottom panel, characterised in that the outside covering profile (11) bears from outside against the outside side wall outer panel (3) and the end face of the bottom panel (2) associated with said side wall, while the inside covering profile (13) bears against the inside of the inside side wall outer panel (4) and on the top of the top bottom outer panel (7).

2. A connection according to claim 1, characterised in that the inside covering profile (13) rests, in each case by a smooth edge strip, both on the inside of the inside side wall outer panel (4) and on the top of the top bottom outer panel (7).

3. A connection according to claim 2, characterised in that the overlapping and superposed edge zones of the top bottom outer panel (7) and the inside covering profile (13) extend obliquely both to the bottom panel (2) and also obliquely to the side wall panel (1).

4. A connection according to claim 3, characterised in that the overlapping and superposed edge zones of the top bottom outer panel (7) and the inside covering profile (13) extend at an angle of about 45° to the bottom panel (2) obliquely both to the bottom panel (2) and also obliquely to the side wall panel (1).

5. A connection according to any one of claims 1 to 4, characterised in that the inside covering profile (13) is contoured so as to be self-reinforcing and forms longitudinal ribs (14) for the purpose.

6. A connection according to claim 1, characterised in that the inside covering profile (13) forms in cross-section a right angle with smooth limbs, the limb associated with the bottom panel (2) having an edge strip directed unilaterally upwards.

7. A connection according to any one of claims 1 to 5, characterised in that the connection between the inside covering profile (13), on the one hand, and the inside side wall outer panel (4) and the top bottom outer panel (7), on the other hand, is made by rivets.

8. A connection according to claim 7, characterised in that the rivets are explosive type rivets.

9. A connection according to claim 6, characterised in that the connection between the top bottom outer panel (7) and the limb of the inside covering profile (13) adjacent the bottom panel is made by a weld seam in front of the end face of the limb of the inside covering profile adjacent the bottom panel.

10. A connection according to claims 6 and 9, characterised in that the edge of the top bottom outer panel (7) for connection to the inside covering profile (13) is offset upwards relatively to the actual bottom panel (2) and the limb of the inside covering profile (13) adjacent the bottom panel is taken to close to the inner edge of the upwardly offset edge of the top bottom outer panel (7).

11. A connection according to any one of claims 1 to 4, characterised in that one limb of the inside covering profile (13) is fork-shaped in cross-section and the inside side wall outer panel and the top bottom outer panel is introduced into this fork.

12. A connection according to claim 11, characterised in that the inside side wall outer panel (13) and the top bottom outer panel (7) is introduced without play into the fork to an extent such that no additional fixing means are required in the fork zone.

13. A connection according to claim 11 or 12, characterised in that the inside side wall outer panel (4) is introduced into the fork of the inside covering profile (13), in that the inside side wall outer panel (4) is cranked in front of the fork into the interior of the side wall panel (1) to an extent such that the outside of the side wall outer panel (4) and the outside of the limb of the covering profile (13) externally adjoining the side wall outer panel lie in one vertical plane.

14. A method of making a connection according to at least one of claims 1 to 13 between the bottom end of a side wall panel and the associated longitudinal edge of the bottom panel of a large container, wherein both the side wall and the bottom panel are a prefabricated sandwich panel and, after the two panels have been joined together, there is initially in the transition zone a free space which is filled with foam, the foam-filled transition zone being covered by an inside covering profile between the top outer panel of the bottom panel and the inside outer panel of the side wall panel, and an outside covering profile between the outside outer panel of the side wall panel and the bottom outer panel of the bottom panel, using the above-mentioned connection, characterised in that the side wall panel and bottom panel in the foam-filled state are first brought into the correct position relative to one another in a fixture, in that the outside covering profile is then brought into contact from outside against the outside side wall outer panel and against the lower bottom outer panel and is connected to the two outer panels, in that the inside covering profile is then fitted to the inside side wall outer panel and the upper bottom outer panel, the dimensions of the side wall panel, bottom panel, and inside covering profile being so dimensioned relatively to one another that the inside covering profile can be brought to bear against the inside of the inside side wall outer panel into the contours of the overall structure, and in that the necessary connections are then made between the covering profile, on the one hand, and the side wall and bottom panels, on the other hand, and then still liquid support foam or its components are introduced into the enclosed zone, which, however, is initially still free from support foam, for which purpose apertures are provided in the inside covering profile, and in that the support foam on setting enters into a rigid connection to the support foam members of the side wall and bottom panels and the two covering profiles, whereupon the inlet apertures are closed, if required by support foam or support foam components left in said apertures.

## Revendications

1. Jonction entre l'extrémité inférieure d'une paroi et le plancher d'un grand récipient, aussi bien le plancher que la paroi étant des éléments sandwich préfabriqués, et l'espace libre entre ces deux éléments après leur assemblage étant rempli de mousse, espace délimité par un profil d'intérieur entre le panneau supérieur du plancher et le panneau intérieur de la paroi ainsi que par un profil d'extérieur entre le panneau extérieur de la paroi et le panneau inférieur du plancher, jonction **caractérisée par le fait** que le profil d'extérieur (11) est fixé au panneau extérieur (3) de la paroi et au bord du plancher (2) orienté vers ladite paroi, tandis que le profil d'intérieur (13) est fixé au panneau intérieur (4) de la paroi et à la face supérieure du panneau supérieur (7) du plancher.

2. Jonction suivant la revendication 1, **caractérisée par le fait** que les bords lisses du profil d'intérieur (13) sont appliqués respectivement contre la face intérieure du panneau intérieur (4) de la paroi et la face supérieure du panneau supérieur (7) du plancher.

3. Jonction suivant la revendication 2, **caractérisée par le fait** que les bords chevauchant l'un l'autre du panneau supérieur (7) du plancher et du profil d'intérieur (13) sont inclinés aussi bien vis-à-vis du plancher (2) que de la paroi (1).

4. Jonction suivant la revendication 3, **caractérisée par le fait** que les bords chevauchant l'un l'autre du panneau supérieur (7) du plancher et du profil d'intérieur (13) sont inclinés d'environ 45° vis-à-vis du plancher (2) et ce aussi bien vis-à-vis du plancher (2) que de la paroi (1).

5. Jonction suivant l'une des revendications 1 à 4, **caractérisée par le fait** que le profil d'intérieur (13) présente un profit raidissant comprenant des nervures longitudinales (14).

6. Jonction suivant la revendication 1, **caracterisée par le fait** que le profil d'intérieur (13) est en forme de cornière à ailes lisses, l'aile du côté du plancher (2) étant munie d'un rebord.

7. Jonction suivant l'une des revendications 1 à 5, **caractérisée par le fait** que l'assemblage entre le profit d'intérieur (13) d'une part et le panneau intérieur (4) de la paroi et le panneau supérieur (7) du plancher d'autre part est fait au moyen de rivets.

8. Jonction suivant la revendication 7, **caractérisée par le fait** que les rivets sont des rivets explosifs.

9. Jonction suivant la revendication 6, **caractérisée par le fait** que l'assemblage entre l'aile du profil d'intérieur (13) du côté du plancher et le panneau supérieur (7) dudit plancher est fait par une soudure pratiquée le long du bord de ladite aile du profil d'intérieur.

10. Jonction suivant l'une des revendications 6 et 9, **caractérisée par le fait** que le bord du panneau supérieur (7) du plancher à assembler avec le profit d'intérieur (13) est surélevé vis-à-vis du plancher (2) et que l'aile du profit d'intérieur (13) du côté du plancher approche l'arête intérieure du bord surélevé du panneau supérieur (7).

11. Jonction suivant l'une des revendications 1 à 4, **caractérisée par le fait** que l'une des ailes du profil d'intérieur (13) est en forme de fourchette où s'engage ou le panneau intérieur de la paroi ou le panneau supérieur du plancher.

12. Jonction suivant la revendication 11, **caractérisée par le fait** que le panneau intérieur (4) de la paroi respectivement le panneau supérieur (7) du plancher est introduit dans la fourchette sans jeu et sur une longueur telle qu'il ne faut pas de moyens supplémentaires pour sa fixation dans la fourchette.

13. Jonction suivant la revendication 11 ou 12**, caractérisée par le fait** que le panneau intérieur (4) de la paroi est introduit dans la fourchette du profil d'intérieur (13) et que ledit panneau (4) présente, avant de pénétrer dans la fourchette, un profil en retrait vis-à-vis de la paroi (1) de sorte que la face extérieure du panneau (4) de la paroi et celle de l'aile du profil (13) appliquée de l'extérieur contre le panneau intérieur de la paroi se trouvent dans le même plan vertical.

14. Procédé pour la réalisation d'une jonction suivant au moins l'une des revendications 1 à 13 entre l'extrémité inférieure d'une paroi et le plancher d'un grand récipient, aussi bien le plancher que la paroi étant des éléments sandwich préfabriqués, et l'espace libre entre ces deux éléments après leur assemblage étant rempli de mousse, espace délimité par un profil d'intérieur entre le panneau supérieur du plancher et le panneau intérieur de la paroi ainsi que par un profil d'extérieur entre le panneau extérieur de la paroi et le panneau inférieur du plancher, à l'aide de la jonction précitée, procédé **caractérisé par le fait** que d'abord la paroi et le plancher, remplis de mousse, sont posés dans un montage pour les positionner correctement l'un par rapport à l'autre, qu'ensuite le profil d'extérieur est appliqué contre et fixé sur le panneau extérieur de la paroi et le panneau inférieur du plancher, qu'ensuite le profit d'intérieur est adapté au panneau intérieur de la paroi et au panneau supérieur du plancher, les cotes de la paroi, du plancher et du profit d'intérieur étant définies réciproquement de sorte que le profil d'intérieur peut être introduit dans la construction d'ensemble pour être appliqué à la face intérieure du panneau intérieur de la paroi, qu'ensuite les fixations nécessaires entre le profit d'intérieur, d'une part, et la paroi et le plancher, de l'autre, sont réalisées, qu'ensuite de la mousse liquide ou ses composants sont introduits dans l'espace ainsi formé, encore vide, à quelle fin sont prévus des orifices dans le profit d'intérieur, la mousse se solidifiant établissant une liaison solide entre les charges en mousse de la paroi et du plancher, d'une part, et tes deux profits, de l'autre, après quoi les orifices précités sont bouchés le cas échéant moyennant la mousse ou ses composants laissés dans ces orifices.
